# EUROPEAN PATENT SPECIFICATION

(11) **EP 0 965 464 B1**
(45) Date of publication and mention of the grant of the patent: **17.11.2004**
(21) Application number: 99304817.2
(22) Date of filing: 18.06.1999
(51) Int. Cl.: B60C 11/11, B60C 11/12

(54) **Heavy duty tyre**
LKW-Reifen
Bandage pneumatique pour poids-lourds

(30) Priority: 19.06.1998 JP 17326298
(43) Date of publication of application: 22.12.1999
(73) Proprietor: Sumitomo Rubber Industries Ltd., Kobe-shi, Hyogo-ken (JP)
(72) Inventor: Tuda, Satoshi, Akashi-shi, Hyogo-ken (JP)
(74) Representative: Manitz, Finsterwald & Partner

(56) References cited:
- PATENT ABSTRACTS OF JAPAN vol. 1996, no. 07, 31 July 1996 (1996-07-31) -& JP 08 072508 A (SUMITOMO RUBBER IND LTD), 19 March 1996 (1996-03-19)
- PATENT ABSTRACTS OF JAPAN vol. 1997, no. 02, 28 February 1997 (1997-02-28) & JP 08 282213 A (SUMITOMO RUBBER IND LTD), 29 October 1996 (1996-10-29)
- PATENT ABSTRACTS OF JAPAN vol. 017, no. 472 (M-1470), 27 August 1993 (1993-08-27) -& JP 05 112104 A (SUMITOMO RUBBER IND LTD), 7 May 1993 (1993-05-07)

## Description

The present invention relates to a pneumatic tyre, more particularly to a heavy duty all-season tyre improved in uneven wear without sacrificing running performance.

Such tyre, corresponding with the preamble of claim 1, is known from JP-A-08 072 508.

Hitherto, for the tread of heavy duty tyres for trucks, buses and the like used on surfaced roads, rib-patterns have been widely used. Recently, however, due to the increased travel distance and travelling speed of such vehicles and use covering wide areas including snow or wet conditions, the use of all-season tyres has increased. For all-season tyres, a block pattern is usually used for good performance on wet and snow covered roads. In block pattern tyres, however, uneven wear is liable to occur in comparison with rib patterns. Especially on the front wheel, in the second block rows from the tread edges, uneven wear of the so-called heel-and-toe wear and bunching wear types is liable to occur.

It is therefore, an object of the present invention to provide a heavy duty tyre in which uneven wear especially of the second block rows can be effectively prevented.

This object is attained by a tyre of the above mentioned kind, which additionally comprises the features set out in the characterizing portion of claim 1.

Preferably, the middle axial grooves in each row are curved towards the same circumferential direction, but, between the two rows of the middle blocks, the curving directions are reversed. The lateral sipes in each row are curved in the same manner as the middle axial grooves therein so that the lateral sipes and middle axial grooves are substantially parallel with each other. The central axial grooves in each row are inclined in the same direction so that the central axial grooves are substantially parallel with each other.

An embodiment of the present invention will now be described in detail in conjunction with the accompanying drawings:
Fig.1 is a cross sectional view of a tyre;
Fig.2 is a developed plan view showing an example of the tread pattern;
Fig.3 is a plan view showing a central block;
Fig.4 is a plan view showing a middle block;
Fig.5 is a graph showing an effect of the present invention; and
Fig.6(A) and Fig.6(B) show tread patterns used to show the above-mentioned effect, which tread patterns, however, do not form part of the present invention.

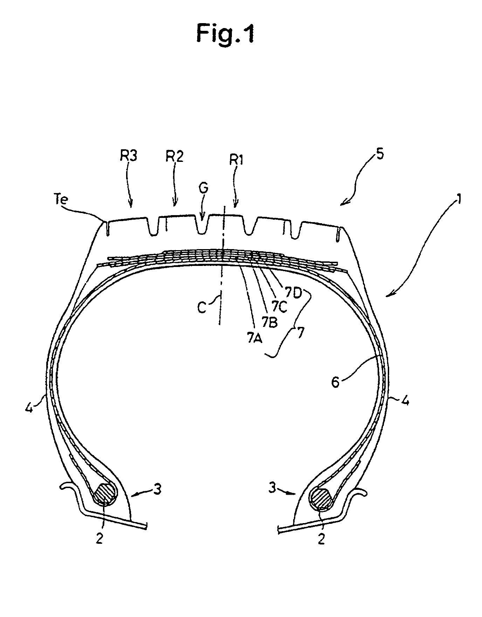

In Fig.1, heavy duty tyre 1 comprises a tread portion 5, a pair of sidewall portions 4, a pair of bead portions 3 each with a bead core 2 therein, a carcass 6 extending between the bead portions 3, and a belt 7 disposed radially outside the carcass 6 in the tread portion 5.

In this embodiment, the heavy duty tyre 1 is a so-called all-season radial tyre of size 11R22.5.

The carcass 6 is composed of at least one ply of cords arranged at an angle of from 70 to 90 degrees with respect to the tyre equator C, extending between the bead portions 3 through the tread portion 5 and sidewall portions 4 and being turned up around the bead cores 2 from the inside to outside of the tyre. For the carcass cords, inorganic cord such as steel cords and organic fibre cords, e.g. polyester, nylon, rayon, aromatic polyamide fibre and the like can be used. In this embodiment, the carcass 6 is composed of a single ply of steel cords arranged radially at substantially 90 degrees.

The belt 7 is composed of at least two crossed plies of parallel cords. In this embodiment there are four plies of steel cords including a radially innermost first ply 7A made of cords laid at an angle of from 50 to 70 degrees and second to fourth plies 7B, 7C and 7D each made of cords laid at an angle of not more than 30 degrees with respect to the tyre equator C.

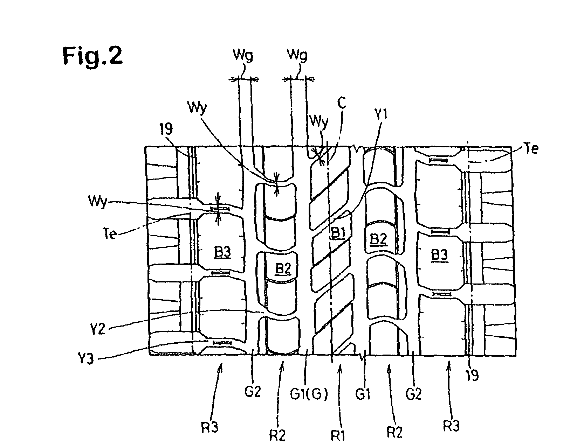

The tread portion 5 is, as shown in Fig.2, provided with at least four longitudinal main grooves G and axial grooves Y intersecting the longitudinal main grooves G to form a block pattern.

In order to improve wear resistance and uneven wear resistance, the negative ratio of the tread patter is decreased and set in a range of from 0.26 to 0.34. The negative ratio is a ratio S1/S of grooved area S1 occupied in the total ground contact area S.

The longitudinal main grooves G extend continuously in the circumferential direction and have a groove width Wg of not less than 2.0 mm, but preferably not more than 19.0 mm.

The longitudinal main grooves G include an axially inner groove G1 disposed on each side of the tyre equator C, and an axially outer groove G2 disposed on the axially outside thereof. The number of longitudinal main grooves G is four or five, preferably four. The longitudinal main grooves G are axially arranged substantially equi-distantly within the tread width.

At least two, in this embodiment all of the four longitudinal main grooves G are a substantially straight groove having a groove width Wg of not less than 7.0 mm. In this embodiment, the groove width Wg is substantially constant along the groove length. However, it is possible to change the groove width Wg. Further, in addition to the straight groove, a zigzag groove may be used.

The above-mentioned axial grooves Y include central axial grooves Y1 extending between the inner grooves G1, middle axial grooves Y2 extending between the inner grooves G1 and outer grooves G2, and outer axial grooves Y3 extending between the outer grooves G2 and tread edges Te. Therefore, a circumferential row R1 of central blocks B1 is formed between the adjacent inner grooves G1 and G1, and a circumferential row R2 of middle blocks B2 is formed between each of the inner grooves G1 and the adjacent outer groove G2, and a circumferential row R3 of shoulder blocks B3 is formed between each of the outer grooves G2 and the adjacent tread edge Te. The axial grooves Y are defined as having a groove width Wy of at least 2.0 mm.

To protect the middle block row R2 from uneven wear, the axial grooves Y2 are formed as a curved groove 11, 50% or more of which is curved at a single radius R of from 0.5 to 1.0 times the axial length Ly. All the axial grooves Y2 in each row R2 are curved towards one circumferential direction F1, and the centre of curvature is located between the inner and outer grooves G1 and G2. Thus, the crown P of the axial groove in the direction F1 is located between the main grooves G1 and G2, and thus from the crown P towards each side thereof, the axial groove is inclined to the reverse direction F2. For water drainage, uneven wear resistance and the like, the crown P is preferably located in the central one third part 11M of the axial groove Y2 in the tyre axial direction. For the configuration of the axial grooves Y2, a multi-radius curve or a combination of curve and straight region may be used.

On the other hand, the central axial grooves Y1 are substantially straight and inclined in the same direction at an angle of not more than 60 degrees (for example 40 degrees) with respect to the axial direction of the tyre.

The outer axial grooves Y3 are a substantially straight groove or a slightly bent groove which is substantially parallel with the tyre axial direction.

In this invention, each of the middle blocks B2 is further provided with a longitudinal sipe 15 and an arcuate lateral sipe 16 in a T-shaped formation. The longitudinal sipe 15 extends circumferentially along the axially outer edge 120 of the middle block B2 across the circumferential length thereof. The axial width W1 of a part 17 defined between the longitudinal sipe 15 and the outer edge 120 is set in the range of about 2.0 to 8.0 mm. The arcuate lateral sipe 16 is substantially parallel with the axial grooves Y2 and extends from the axially inner edge 12i to the longitudinal sipe 15. The longitudinal sipes 15 prevent uneven wear from extending axially inwardly from the axially outer edge 120 of the block B2. In this embodiment, one lateral sipe 16 is disposed in the centre of block B2 in the circumferential direction, and all the longitudinal sipes 15 in each row R2 are straight and arranged in line.

In this embodiment, further, each of the central blocks B1 is provided with a straight sipe 13 substantially parallel with the straight axial grooves Y1.

The sipes 13, 15 and 16 improve wet performance and on-the-snow performance. The sipes are defined as having a width of less than about 1.5 mm.

In this embodiment, in order to improve tread shoulder wear and wandering performance, each of the shoulder blocks B3 is provided along and adjacently to the tread edge Te with a narrow shoulder groove 19 having a groove width of less than 3.0 mm. The depth of the axial grooves Y is set in the range of from 0.7 to 1.0 times the depth DG of the longitudinal main grooves G. In this embodiment, the central axial grooves Y1 and middle axial grooves Y2 have a constant depth of 1.0 times the main groove depth DG. The outer axial grooves Y3 have a variable depth, and a shallow part is formed in an axial centre thereof which is about one third of the groove length. The depth is about 0.7 times DG in the shallow part, but on both sides thereof 1.0 times DG. Further, the shallow part is provided with a sipe along the groove centre line, and the sipe depth is about 0.5 times DG.

The depth of the sipes 13, 15 and 16 is set in the range of from 0.5 to 1.0 times the main groove depth DG.

In this embodiment, the sipes 13 in the central blocks B1 have a maximum depth of 1.0 times DG, and one or two shallow parts being less than 0.5 times DG are formed. The sipes 16 on the middle blocks B2 have a maximum depth of 1.0 times DG, and one or two shallow parts being less than 0.5 times DG are formed. The sipes 15 have a substantially constant depth of about 0.7 or 0.8 times DG. By providing the shallow parts, the adjacent blocks B3 and subdivided parts of the blocks B1 and B2 are tied each other and the block rigidity can be increased.

The depth of the narrow shoulder grooves 19 is set in the range of from 0.6 to 0.9 times the main groove depth DG.

As to the inclinations of the axial grooves Y and sipes 13 and 16, the axial grooves Y1 and sipes 13 in each row R1 (plural rows are supposed) are inclined in the same direction so that they are parallel with each other. The inclination angle thereof is in the range of from about 40 to 60 degrees with respect to the tyre equator C.

The axial grooves Y2 and sipes 16 in each row R2 are curved or inclined in the same manner so that they are substantially parallel to each other. The inclining direction at the axially inner ends of the axial grooves Y2 and sipes 16 is the same as that of the axial grooves Y1 and sipes 13 in the adjacent central block row R1. The inclination angle at the axially inner end is in the range of about 50 to 70 degrees with respect to the tyre equator C, which is substantially same as the inclination angle at the longitudinal sipe 15. In the embodiment, as shown in Fig.2, the curved direction on one side of the tyre equator C is reversed to that on the other side, and the left axial grooves Y2, central axial groove Y1 and right axial groove Y2 are aligned in S-shaped curved line.

The axial grooves Y3 in this embodiment are a slightly bent groove of which the axially inner part is inclined in the same direction as the inclination direction of the adjacent axial grooves Y2 at the axially outer end. The inclination angle is about 70 plus/minus 10 degrees with respect to the tyre equator C. The remaining part is substantially parallel to the axial direction.

The tread pattern in this embodiment is, therefore, a bi-directional pattern.

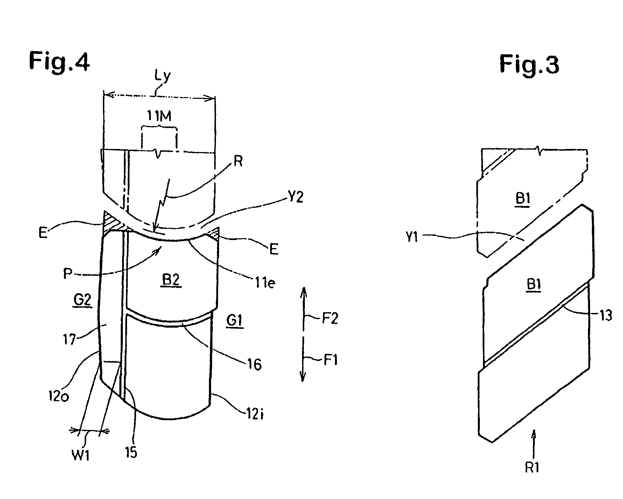

Preferably, acute angled corners of the blocks are chamfered. However, in the case of the middle blocks B2, it is preferable that at least 55% of the concave edge 11e remains as shown in Fig.4.

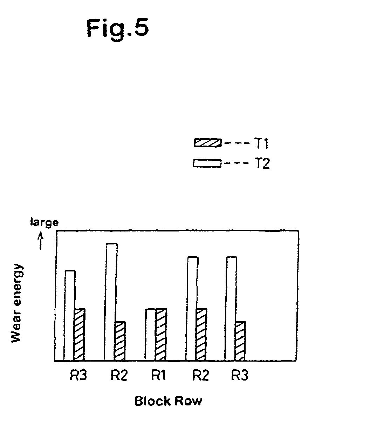

Fig.5 shows the difference in wear energy between the heel edge and toe edge of a block in each row R1, R2 and R3, wherein

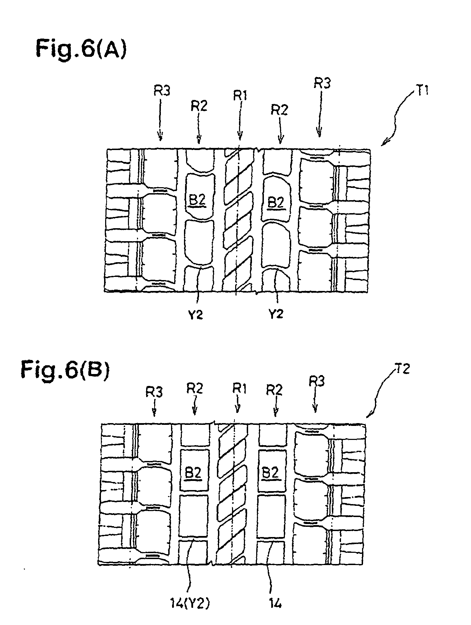

T1 is the tread pattern shown in Fig.6(A) which is the equivalent of Fig.2 except that only the sipes 15 and 16 in the middle block rows R2 are eliminated, and T2 is the tread pattern shown in Fig.6 (B) which is the equivalent of Fig.6(A) except that straight grooves 14 are used instead of the arced axial grooves Y2.

The wear energy is defined as the product of the ground pressure and the amount of slip.

As shown in this figure, the arcate axial grooves Y2 greatly decrease the wear energy difference not only in the middle block rows R2 but also in the shoulder block rows R3. Thus, uneven wear especially heel-and-toe wear can be effectively controlled.

Test tyres of size 11R22.5 14R having the structure shown in Fig.1 and specifications given in Table 1 were tested for wear resistance, uneven wear resistance (heel-and-toe wear and bunching wear), and wet running performance. The test tyres were the same tread pattern as shown in Fig.2 except for axial grooves Y2 and sipes 15, 16 in the middle block row B2.

### Wear Resistance and Uneven Wear Resistance Tests:

Test tyres were mounted on all the wheels of a 2-D4 wheel type truck (long-distance truck with a load capacity of ten tons) and run on dry asphalt roads for 50,000 km. Then, overall wear of the tread and heel-and-toe wear and bunching wear in the middle block row were evaluated.

### Wet Running Performance Test:

Using the above-mentioned truck with new (not worn) tyres, the running performance on wet asphalt roads was evaluated by a test driver's feeling.
Rim size: 7.50X22.5 (standard wheel rim)
Pressure: 850 kpa

**Table 1**

| Tyre | Ex.1 | Ex.2 | Ref.1 | Ref.2 | Ref.3 | Ex.3 | Ref.4 | Ref.5 | Ex.4 | Ex.5 |
|---|---|---|---|---|---|---|---|---|---|---|
| Negative ratio | 35 | 33 | 30 | 30 | 30 | 30 | 30 | 30 | 27 | 25 |
| Axial groove Y2 | arc | arc | Straight | straight | straight | arc | arc | arc | arc | arc |
| Lateral arced sipe | present | present | None | present | present | present | present | none | present | present |
| Longitudinal sipe | present | present | None | none | present | present | none | none | present | present |
| Wear resistance Middle block | B | A | A | A | A | A | A | A | A | A |
| Heel-&-toe wear | B | A | B | B | B | A | A | A | A | A |
| Bunching wear | B | A | C | B | A | A | B | C | A | A |
| Wet running performance | A | A | C | A | A | A | A | B | B | C |
| (Test result: A=good, B=standard, C=poor) | | | | | | | | | | |

## Claims

1. A heavy duty tyre comprising at least four main grooves (G) including a pair of axially inner grooves (G1) and a pair of axially outer grooves (G2) each extending continuously in the tyre circumferential direction and axial grooves (Y) intersecting the main grooves (G), so as to divide a tread portion into two rows of circumferentially arranged middle blocks (B2) and at least one row of circumferentially arranged central blocks (B1) ,
said axial grooves including central axial grooves (Y1) dividing the central blocks, middle axial grooves (Y2) dividing the middle blocks, and outer axial grooves (Y3),
said central axial grooves (Y1) being a substantially straight groove,
said middle axial grooves (Y2) being a curved groove,
said outer axial grooves (Y3) being a substantially straight groove or a slightly bent groove,
said middle blocks (B2) each provided with a longitudinal sipe (15) and a lateral sipe (16),
said longitudinal sipe (15) extending along the axially outer edge (120) of the block (B2), and
said lateral sipe (16) extending from the axially inner edge (12i) of the block to the longitudinal sipe (15)
**characterised in that** the outer axial grooves (Y3) are dividing the shoulder blocks so as to further divide the tread portion into two rows of circumferentially arranged shoulder blocks (B3), **in that** the middle axial grooves (Y2) are each curved so that the centre of curvature thereof is located between the axially inner and outer grooves (G1 and G2), and the middle axial groove (Y2) has a crown (P) located in the central one third part (11M) of the middle axial groove in the tyre axial direction, and **in that**
the outer axial grooves (Y3) are each provided in the axial centre thereof with a shallow part, and the shallow part is provided along the groove centre line with a sipe.

2. A heavy duty tyre according to claim 1, **characterised in that** the middle axial grooves (Y2) in each row are curved towards the same circumferential direction, but between the two rows of the middle blocks (B2), the curving directions are reversed.

3. A heavy duty tyre according to claim 2, **characterised in that** the lateral sipes (16) in each row are curved in the same manner as the middle axial grooves (Y2) therein so that the lateral sipes (16) and middle axial grooves (Y2) are substantially parallel with each other.

4. A heavy duty tyre according to claim 3, **characterised in that** the central axial grooves (Y1) in each row are inclined in the same direction so that the central axial grooves (Y1) are substantially parallel with each other.

## Patentansprüche

1. Schwerlastreifen mit mindestens vier Hauptrillen (G), die ein Paar axial innere Rillen (G1) und ein Paar axial äußere Rillen (G2), die sich jeweils kontinuierlich in der Umfangsrichtung des Reifens erstrecken, und axiale Rillen (Y) umfassen, die die Hauptrillen (G) schneiden, um einen Laufflächenabschnitt in zwei Reihen von in Umfangsrichtung angeordneten mittleren Blöcken (B2) und mindestens eine Reihe von in Umfangsrichtung angeordneten zentralen Blöcken (B 1) zu unterteilen,
wobei die axialen Rillen zentrale axiale Rillen (Y1), die die zentralen Blöcke unterteilen, mittlere axiale Rillen (Y2), die die mittleren Blöcke unterteilen, und äußere axiale Rillen (Y3) umfassen,
wobei die zentralen axialen Rillen (Y1) eine im Wesentlichen gerade Rille sind,
wobei die mittleren axialen Rillen (Y2) eine gekrümmte Rille sind,
wobei die äußeren axialen Rillen (Y3) eine im Wesentlichen gerade Rille oder eine geringfügig gebogene Rille sind,
wobei die mittleren Blöcke (B2) jeweils mit einem Längseinschnitt (15) und einem Quereinschnitt (16) versehen sind,
wobei der Längseinschnitt (15) sich entlang der axial äußeren Kante (120) des Blockes (B2) erstreckt, und
wobei der Quereinschnitt (16) sich von der axial inneren Kante (12i) des Blockes zu dem Längseinschnitt (15) erstreckt,
**dadurch gekennzeichnet, dass** die äußeren axialen Rillen (Y3) die Schulterblöcke unterteilen, um den Laufflächenabschnitt weiter in zwei Reihen von in Umfangsrichtung angeordneten Schulterblöcken (B3) zu unterteilen, dass die mittleren axialen Rillen (Y2) jeweils derart gekrümmt sind, dass deren Krümmungsmittelpunkt sich zwischen den axial inneren und äußeren Rillen (G 1 und G2) befindet, und die mittlere axiale Rille (Y2) eine Krone (P) aufweist, die sich in dem das zentrale Drittel ausmachenden Teil (11M) der mittleren axialen Rille in der axialen Richtung des Reifens befindet, und dass die äußeren axialen Rillen (Y3) jeweils in ihrer axialen Mitte mit einem flachen Teil versehen sind, und dass der flache Teil entlang der Rillenmittellinie mit einem Einschnitt versehen ist.

2. Schwerlastreifen nach Anspruch 1, **dadurch gekennzeichnet, dass** die mittleren axialen Rillen (Y2) in jeder Reihe in die gleiche Umfangsrichtung gekrümmt sind, aber die Krümmungsrichtungen zwischen den beiden Reihen der mittleren Blöcke (B2) umgekehrt sind.

3. Schwerlastreifen nach Anspruch 2, **dadurch gekennzeichnet, dass** die Quereinschnitte (16) in jeder Reihe auf die gleiche Weise wie die mittleren axialen Rillen (Y2) darin gekrümmt sind, so dass die Quereinschnitte (16) und die mittleren axialen Rillen (Y2) im Wesentlichen parallel zueinander liegen.

4. Schwerlastreifen nach Anspruch 3, **dadurch gekennzeichnet, dass** die zentralen axialen Rillen (Y1) in jeder Reihe in die gleiche Richtung geneigt sind, so dass die zentralen axialen Rillen (Y1) im Wesentlichen parallel zueinander liegen.

## Revendications

1. Pneumatique pour poids lourds, comprenant au moins quatre gorges principales (G) qui comprennent une paire de gorges axialement internes (G1) et une paire de gorges axialement externes (G2) s'étendant chacune de façon continue dans la direction circonférentielle du pneumatique, et des gorges axiales (Y) qui recoupent les gorges principales (G), pour diviser une partie de bande de roulement en deux rangées de blocs médians (B2) disposés circonférentiellement et au moins une rangée de blocs centraux (B1) disposés circonférentiellement,
des gorges axiales comprenant des gorges axiales centrales (Y1) divisant les blocs centraux, des gorges axiales médianes (Y2) divisant les blocs médians, et des gorges axiales externes (Y3),
les gorges axiales centrales (Y1) étant sous forme d'une gorge pratiquement rectiligne,
les gorges axiales médianes (Y2) étant sous forme d'une gorge courbe,
les gorges axiales externes (Y3) étant une gorge pratiquement rectiligne ou une gorge légèrement courbée,
les blocs médians (B2) ayant chacun une fente longitudinale (15) et une fente latérale (16),
la fente longitudinale (15) s'étendant le long du bord axialement externe (120) du bloc (B2), et
la fente latérale (16) s'étendant du bord axialement interne (12i) du bloc vers la fente longitudinale (15),
**caractérisé en ce que** les gorges axiales externes (Y3) divisent les blocs d'épaulement pour assurer une division supplémentaire de la partie de bande de roulement en deux rangées de blocs (B3) d'épaulement disposées circonférentiellement, **en ce que** les gorges axiales médianes (Y2) sont courbées chacune afin que leur centre de courbure soit placé entre les gorges axialement internes et externes (G1 et G2) et 1a gorge axiale médiane (Y2) possède une partie bombée (P) disposée dans le tiers central (11M) de la gorge axiale médiane dans la direction axiale du pneumatique, et **en ce que**
les gorges axiales externes (Y3) comportent chacune, à leur centre axial, une partie peu profonde, et la partie peu profonde est munie, le long de l'axe central de la gorge, d'une fente.

2. Pneumatique pour poids lourds selon la revendication 1, **caractérisé en ce que** les gorges axiales médianes (Y2) dans chaque rangée sont courbées dans la même direction circonférentielle, mais, entre les deux rangées de blocs médians (B2), les directions de courbure s'inversent.

3. Pneumatique pour poids lourds selon 1a revendication 2, **caractérisé en ce que** les fentes latérales (16) de chaque rangée sont courbées de la même manière que les gorges axiales médianes (Y2) qu'elles comportent si bien que les fentes latérales (16) et les gorges axiales médianes (Y2) sont pratiquement parallèles.

4. Pneumatique pour poids lourds selon la revendication 3, **caractérisé en ce que** les gorges axiales centrales (Y1) de chaque rangée sont inclinées dans la même direction si bien que les gorges axiales centrales (Y1) sont pratiquement parallèles les unes aux autres.
